**Europäisches Patentamt**

**European Patent Office**

**Office européen des brevets**

(19)

(11) Veröffentlichungsnummer: **0 232 432**
B1

(12) **EUROPÄISCHE PATENTSCHRIFT**

(45) Veröffentlichungstag der Patentschrift:
**18.10.89**

(51) Int. Cl.⁴: **G01N 19/10**, G01N 25/68,
G01N 25/56

(21) Anmeldenummer: **85114868.4**

(22) Anmeldetag: **23.11.85**

(54) Verfahren und Vorrichtung zum Messen der relativen Luftfeuchtigkeit, Anwendung des Verfahrens zum Entfeuchten geschlossener Räume und Einbaulüfter zur Durchführung des Verfahrens.

(43) Veröffentlichungstag der Anmeldung:
**19.08.87 Patentblatt 87/34**

(45) Bekanntmachung des Hinweises auf die Patenterteilung:
**18.10.89 Patentblatt 89/42**

(84) Benannte Vertragsstaaten:
**AT BE CH DE FR GB IT LI LU NL SE**

(56) Entgegenhaltungen:
**EP-A- 0 037 440
DE-U- 1 836 023
US-A- 4 328 455
US-A- 4 435 091**

**ELEKTRONIK, Nr. 6, 25. März 1983, Seiten 96-98,
München; APPLIKATION "Programmierbare Steuerung
gibt Sollwert für Temperatur- und Feuchteregelung vor"
ADVANCES IN INSTRUMENTATION, Band 37,
Teil 3, 1982, Seiten 1617-1629, Research Triangle Park,
North Carolina, US; J.C. HARDING "Precision humidity
measurement"
REVUE PRATIQUE DU FROID ET DU
CONDITIONNEMENT D'AIR, Band 36, Nr. 512, Juni 1981,
Seiten 45-50, Paris, FR; B. CRETINON et al.: "La mesure
de l'humidité de l'air"**

(73) Patentinhaber: **ACONVEST AG, Steinenbachgässlein 34,
CH-4051 Basel(CH)**

(72) Erfinder: **Specht, Herbert, Dr., Sauerbruchstrasse 13,
D-6204 Taunusstein 5(DE)**

(74) Vertreter: **Allgeier, Kurt, Friedrichstrasse 24,
D-7888 Rheinfelden(DE)**

**Beschreibung**

Zur Messung der relativen Luftfeuchte sind zahlreiche Verfahren und Vorrichtungen bekannt, wie beispielsweise aus dem "Handbuch der industriellen Meßtechnik" von P. Profos. Vulkan Verlag Essen, l974, S. 652 ff. Abschn. 3.10.4 hervorgeht. Die Meßgenauigkeit ist bei diesen bekannten Verfahren bzw. Vorrichtungen in ziemlich weiten Grenzen unterschiedlich, und jeweils für einen bestimmten Anwendungszweck und dessen Genauigkeitsanforderungen werden daher geeignete Vorrichtungen benutzt.

Für technische Anwendungen zur industriellen Nutzung stehen Verfahren und Vorrichtungen zur Verfügung, die eine hohe Meßgenauigkeit erreichen, jedoch entweder apparativ aufwendig sind oder vielfach eine geringe Anzeigegeschwindigkeit aufweisen. Von den bekannten Verfahren sind einige nur für die Feuchtigkeitsmessung von Luft bzw. Gasen oder für die Messung der Materialfeuchte von Feststoffen geeignet. Nachteilig ist bei mehreren bekannten und technisch anspruchsvollen Vorrichtungen, daß sie verhältnismäßig großen Raumbedarf haben.

Ferner ist es bei derartigen Verfahren und Vorrichtungen bekannt, die Meßwerte zu Prozeßsteuerzwecken zu benutzen und das Meßergebnis als Regelimpuls weiterzuverarbeiten und bestimmte Regel-Kennlinien oder Regel-programme zu steuern, beispielsweise bei Trocknungsanlagen. der Papierherstellung, Verarbeitung von Naturfasern und Lebensmitteln, Kultur von feuchtigkeitsempfindlichen Pflanzen, Herstellung von keramischen Produkten u. dgl. m..

In öffentlichen Gebäuden, Hotels und zunehmend auch in Wohnzwecken dienenden Bauwerken sind Feuchträume wie beispielsweise Bäder, Toiletten und dergl. in aller Regel mit motorisch betriebenen Lüftern ausgerüstet, die auf ein vom Benutzer ausgelöstes Signal hin in Tätigkeit treten und nach entweder Verlassen des Raumes oder nach Ablauf eines voreingestellten Zeitintervalls wieder abgestellt werden. Wenn nun während eines längeren Zeitraumes keine Benutzung stattfindet, unterbleibt auch die Lüftung, wie es z.B. bei nur saisonbetriebenen Hotels der Fall ist. Es kann dann zu hohen Luftfeuchtigkeitswerten kommen, die bei längerer Dauer zu Feuchtigkeitsschäden führen, wie etwa Schimmelpilzbildung, Schäden an Armaturen u. dgl. m..

Daher besteht die Aufgabe der Erfindung darin, Verfahren und Vorrichtungen zu deren Ausübung zu schaffen, die bei kleinstem apparativen Aufwand und geringstmöglichem Raumbedarf unter Verwendung kommerzieller preisgünstiger Bauteile einen hohen Standard an Meßgenauigkeit und Anzeigegeschwindigkeit für lange Betriebszeiten in der Größenordnung von mindestens 100.000 Stunden erreichen, und die ferner auf Grund dieses hohen Standards auch industrielle Anwendungen mit hohen Leistungsanforderungen ermöglichen.

Zur Lösung dieser Aufgabe geht die Erfindung zunächst von dem bei Taupunkthygrometern bekannten Effekt aus, daß ein kleiner Metallspiegel im Meßgasstrom durch Peltier-Elemente so gekühlt wird, daß die steuernden Photozellen gerade einen Tau- oder Eisniederschlag auf dem Spiegel feststellen. Bekannte automatische Tauspiegel-Hygrometer sind verhältnismäßig teuer und haben vor allem den Nachteil der Verstaubung des immer spurenweise feuchten Spiegels, so daß deren Betriebsdauer deshalb sehr begrenzt ist, weil die Meßgenauigkeit sehr rasch abnimmt (vergl. Profos a.a.O. S. 660). Taupunkthygrometer, die die Merkmale des Oberbegriffs des Anspruchs 1 aufweisen, sind auch z.B. aus EP-A2 0 037 440, US-A 4 328 455 oder aus ADVANCES IN INSTRUMENTATION, Band 37, 3, 1982, 1617–1629, Research Triangle Park, NC, USA; Harding; J.C. "Precision humidity measurement" bekannt.

Zum Messen und zur Beeinflussung der relativen Feuchtigkeit, insbesondere der relativen Luftfeuchte in geschlossenen Räumen mittels eines durch ein Peltier-Element unter den Taupunkt abgekühlten und dadurch einen Beschlag aufweisenden Metallspiegels, bei dem durch einen Sensor die Reflexion des Strahlengangs einer Lichtquelle gemessen wird, besteht das erfindungsgemäß vorgeschlagene Verfahren darin, daß die Abtauzeit von der Bildung bis zum völligen Verschwinden des Beschlags auf dem Metallspiegel oder sonstigen reflektierenden Elements als indirektes, jedoch proportionales Maß für die Ist-Luftfeuchtigkeit mit der Normaldauer des Abtauvorganges bei einer vorgewählten, gewünschten relativen Feuchtigkeit verglichen und durch die so ermittelte Zeitdifferenz ein Steuersignal zum Einschalten und Regeln von Lüftungs- und/oder Beheizungsvorrichtungen ausgelöst wird.

Derartige Peltier-Elemente sind als Module in Stückzahlen preiswert erhältlich; sie transportieren Wärme vom kalten zum heißen Ende, falls die Wärme dort gespeichert oder abgeführt wird. Das kalte Ende kann maximal bis zu 60° C unter die Temperatur des heißen Endes abgekühlt werden, so daß auch Eisbildung erreicht werden kann. Eine scharfe Signaländerung ergibt sich, wenn sich der Beschlag bei Temperaturerhöhung auflöst; eine Temperaturmessung an der blanken Oberfläche des Spiegels im Zeitpunkt der Beschlagsauflösung ergibt den Taupunkt.

Ein weiteres wichtiges Verfahrensmerkmal besteht noch darin, daß mit dem Ablauf der Abkühlzeit des Peltier-Elements ein Zeitgeber für die Normaldauer des Abtauvorganges für die vorgewählte Feuchtigkeit gestartet und die Normaldauer in einen Vergleicher eingegeben wird, der nach Eingabe der ermittelten tatsächlichen aktuellen Abtauzeit bei Überschreiten der Normaldauer das Steuersignal auslöst.

Dabei ist als Verfahrensbestandteil vorgesehen, daß ein mit der heißen Seite auf einer Wärmeableitung angeordnetes und an seiner kalten Oberseite einen Metallspiegel tragendes Peltier-Element der Strahlung einer Lichtquelle ausgesetzt wird, und daß die Reflexstrahlung einen präzise im Reflexwinkel angeordneten Fotoempfänger trifft. Vorteilhaft kann aber auch eine Verfahrensvariante sein, bei der als Sensor ein von einem Peltier-Element direkt kühlbarer Fotodetektor dient, der der Lichtquelle gegenübersteht.

Ferner wird vorgeschlagen, daß als Lichtquelle eine Leuchtdiode im Wellenlängenbereich zwischen etwa 0,8 und 2,8 μm benutzt wird. Besonders günstige Ergebnisse mit exakten Regelimpulsen sind zu erwarten, wenn die Infrarot-Emission eine Wellenlänge von 0,95 μm aufweist, und weiterhin, wenn zur verzögerungsfreien Erfassung der absoluten (Ist-) Feuchte die Wellenlänge entsprechend den Absorptionsstellen bei den Wasserbanden gewählt wird.

Darüber hinaus wird verfahrensgemäß vorgeschlagen, daß die Lichtquelle zur Abtastung des Beschlages optisch gefiltert und elektrisch in einem Frequenzbereich moduliert wird, der weit oberhalb des Störfrequenzspektrums der üblichen Lichtquellen, Lampen und Leuchtstoffröhren liegt, und daß auch die Empfängerseite elektronisch zur Unterdrückung von Störlicht oder sonstigen Störfrequenzen gefiltert wird.

Besonders bedeutsam für einen sicheren, störungsfreien Dauerbetrieb ist die Selbstkalibrierung des Feuchtigkeitssensors in der Weise, daß eine allmähliche Staubbildung auf dem Spiegel oder dem Fotodetektor und/oder ein alterungsbedingter Empfindlichkeitsabfall der Lichtquelle durch Messung und Analogspeicherung des Reflexionswertes zu Anfang bei Inbetriebnahme und bei jedem darauffolgenden durch den Taktgeber ausgelösten Meßzyklus und Vergleich mit dem jeweils aktuellen Reflexionswert vor jedem weiteren Einschalttakt und Eingabe des so ermittelten Reflexionsabfalls für jeden Folge-Meßzyklus als Korrekturwert in die Signalverarbeitung kompensiert wird.

Schließlich kann für den praktischen Anwendungsfall das Verfahren noch dadurch ergänzt und erweitert werden, daß das Ausschaltsignal für die Vorrichtungen zur Beeinflussung der relativen Luftfeuchte von einem wählbar auf ein Zeitintervall eingestellten elektronischen Nachlaufrelais ausgelöst wird, welches deren Einschaltdauer über den Zeitpunkt des Erreichens des Soll-Wertes der relativen Luftfeuchte verlängert.

Die erfindungsgemäßen Verfahrensweisen ermöglichen noch weitere Ausgestaltungen, so daß sie auch für vielfältige technische Anwendungen zu einfachen, störsicheren und für einen Dauerbetrieb vorteilhaften Feuchte-Meß- und Regelsystemen verwendet werden können.

Die Erfindung betrifft auch die vorrichtungsmäßige Ausgestaltungsmöglichkeiten von für praktische Anwendungsfälle vorteilhaften, in ihrem Aufbau aus einfachen Einzel-Elementen bestehenden Meßeinheiten für die relative Feuchte und Regelkombinationen für selbsttätige Regelaufgaben.

Ausgehend von einem an sich bekannten, einen unter den Taupunkt abkühlbaren Metallspiegel oder ein sonstiges reflektierendes Element aufweisenden Peltier-Element, bei dem durch einen Sensor die Reflexion des Strahlenganges einer Lichtquelle gemessen wird, besteht die weitere Erfindung in einer Zeitmeßvorrichtung zum Messen der Abtauzeit von der Bildung bis zum völligen Verschwinden eines von der herrschenden Luftfeuchtigkeit hervorgerufenen Beschlags auf dem Metallspiegel oder sonstigen reflektierenden Element und einem Vergleicher zum Vergleichen der gemessenen Abtauzeit mit einem vorwählbaren, der gewünschten relativen Feuchtigkeit entsprechenden Zeitwert für die Normaldauer des Abtauvorganges sowie einem Differenzierglied zum Auslösen eines der ermittelten Zeitdifferenz entsprechendes Signals zum Einschalten und/oder Regeln von Lüftungs- und/oder Beheizungsvorrichtungen.

Dabei besteht eine bedeutsame Ergänzung dieser Vorrichtung darin, daß durch einen Zeitgeber, der auf die dort gewünschten relativen Luftfeuchte entsprechende Normalzeitdauer der Abtauzeit einstellbar und der mit Beginn der Abkühlzeit des Peltier-Elements in Tätigkeit setzbar, und durch den nach Eingabe der ermittelten tatsächlichen aktuellen Abtauzeit bei Überschreiten der Normaldauer ein Steuersignal auslösbar ist.

Besonders vorteilhafte Vorrichtungsgestaltungen zur Durchführung des erfindungsgemäßen Verfahrens und zur Ausbildung der Meßeinheit bestehen noch darin, daß das Peltier-Element auf dem Boden eines Leistungstransistors angeordnet ist und an seiner Oberseite einen der Strahlung einer Lichtquelle ausgesetzten Metallspiegel trägt, und daß zur Aufnahme der Reflex-Strahlung im Reflexwinkel ein Fotoempfänger angeordnet ist. Eine weitere Ausbildung kann auch darin bestehen, daß ein der Lichtquelle gegenüberstehend angeordneter, vom Peltier-Element direkt gekühlter Fotoempfänger als Sensor ausgebildet ist. Vorteilhaft ist es ferner, wenn die Leuchtdiode im Wellenlängenbereich zwischen etwa 0,8 und 2,9 μm als Lichtquelle gewählt wird. Schließlich wird auch noch eine optische Filterung und elektrische Modulierung der Lichtquelle (4) in einem Frequenzbereich, der weit oberhalb des Störfrequenzspektrums der üblichen Lichtquellen, Lampen, Leuchtstoffröhren u. dgl. liegt, und ferner elektronische Filterung der Empfängerseite (5) zur Unterdrückung von Störlicht oder sonstigen Störfrequenzen vorgeschlagen.

Eine für die Dauer-Funktionssicherheit wesentliche Maßnahme nach der Erfindung besteht in einer Vorrichtung zur Selbstkalibrierung der Meßeinheit für die relative Luftfeuchtigkeit (Feuchtigkeitssensor). Die Dauerfunktion kann durch mehrere Einflüsse, beispielsweise Staubbildung auf dem Spiegel (Dreckeffekt) und durch alterungsbedingten Leistungsabfall beeinträchtigt werden. Zur Behebung dieser Schwierigkeiten ist das Kalibrierungsprinzip an sich bekannt, für die erfindungsgemäße Vorrichtung wird eine besonders einfache und betriebssichere Selbstkalibrierung durch Kompensation einer allmählichen Staubbildung auf dem Spiegel oder dem Fotodetektor und/oder eines alterungsbedingten Empfindlichkeitsabfalles der Lichtquelle durch Messung und Speicherung des Reflexionswertes zu Anfang bei Inbetriebnahme und bei jedem darauffolgenden durch den Taktgeber ausgelösten Meßzyklus vorgeschlagen, so daß durch Vergleich mit dem jeweils aktuellen feuchtigkeitsbedingten Reflexionswert für jeden Meßzyklus die Anfangsbedingungen als Korrekturwert in die Signalverarbeitung übernommen werden.

Eine vorteilhafte Ergänzung für die erfindungsgemäße Meß- und Regelvorrichtung, insbesondere bei der Anwendung zur Feuchtigkeitsüberwachung von Naßräumen, besteht noch in einer Maßnahme, die an sich bekannt ist, jedoch mit der erfindungsgemäßen Meß- und Steuervorrichtung kombiniert werden kann. Vielfach wird bei fensterlosen und mittels Einbaulüftern entfeuchteten Baderäumen oder dergl. Naßräumen beim Betreten oder Betätigen des Lichtschalters der Lüfter eingeschaltet, der nach dem Verlassen des Raumes oder Lichtausschalten noch für ein Zeitintervall eingeschaltet bleibt. In Ergänzung der erfindungsgemäßen Vorrichtung geschieht dies durch ein auf ein wählbares Zeitintervall einstellbares elektronisches Nachlaufrelais, welches durch das Ausschaltsignal für die Vorrichtungen zur Beeinflussung der relativen Luftfeuchte, beispielsweise einen Lüfter auslösbar ist und die Einschaltdauer des betreffenden Gerätes über den Zeitpunkt des Erreichens des Soll-Wertes der relativen Luftfeuchte verlängert.

Der bevorzugte Anwendungsbereich der Erfindung ist die Feuchtigkeitsüberwachung und Entfeuchtung von Naßräumen, die nicht dauernd benutzt und daher nicht regelmäßig entfeuchtet werden. Ein Anwendungsmerkmal der Erfindung besteht daher in der in einstellbaren Zeitintervallen aufeinanderfolgenden selbsttätigen Bestimmungen der jeweils aktuell herrschenden relativen Luftfeuchtigkeit in Naßräumen wie Dusch- und Badezimmern, Schwimmhallen und auch anderen, beispielsweise gewerblich genutzten, höheren Feuchtigkeitsgraden ausgesetzten Räumen, insbesondere während länger andauernder Nichtbenutzung dieser Räume, und zur selbsttätigen Verringerung bzw. Einregelung der relativen Luftfeuchte in diesen Räumen auf einen voreingestellten Wert.

Ein weiterer wichtiger Gegenstand der Erfindung ist ein für die Durchführung und Anwendung des Verfahrens für den bevorzugten Einsatzzweck besonders vorteilhaft ausgestalteter Einbaulüfter. Dieser ist gekennzeichnet durch ein vorzugsweise rechteckiges Lüftergehäuse mit einem darin angeordneten Lüfter-Aggregat mit angeflanschtem Antriebsmotor, in welchem zwischen diesem und der das Gehäuse raum- und zuluftseitig abschließenden mit Zuluftöffnungen versehenen Deckplatte mindestens eine Montageplatte angeordnet ist, an und auf welcher die gesamte oder die wesentlichen Teile der erfindungsgemäßen Regelanordnung und die Vorrichtungen einschließlich der erforderlichen Verdrahtung und des Netzteils angebracht ist. Dafür ist die Montageplatte mit ihren Vorrichtungen und Anordnungen mittels einer Steckvorrichtung mit dem Motoranschlußkasten des Lüfteraggregats leicht lösbar verbunden und durch Herausziehen aus der Steckvorrichtung nach Entfernen der zuluftseitigen Deckplatte des Lüftergehäuses herausnehmbar und im Bedarfsfalle durch eine Austausch-Montageplatte ersetzbar.

Erfindungsgemäß wird weiter vorgeschlagen, daß das erwähnte Nachlaufrelais auf einer besonderen (kleinen), für sich herausnehmbaren Montageplatte angeordnet ist, welche ebenfalls mittels Steckvorrichtungen mit der (großen) Montageplatte bzw. dem Motoranschlußkasten elektrisch verbindbar und an der (großen) Montageplatte lösbar angeordnet ist. Ferner ist es vorteilhaft, wenn nach dem weiteren Vorschlag auf der (großen) Montageplatte oder auf der (kleinen) Montageplatte ein Netzanschlußkasten mittels einer weiteren Steckvorrichtung steckbar aufgesetzt ist, dessen Gehäuse zugleich der Kapselung für das auf der (kleinen) Montageplatte angeordneten Nachlaufrelais dient.

Weitere Vorrichtungsmerkmale bestehen noch darin, daß die zuluft- und raumseitige Deckplatte des Lüftergehäuses in einem Deckplattenrahmen herausnehmbar befestigt und mit kammerartigen Vertiefungen zur Aufnahme von entsprechend passend bemessenen Luftfilterkörpern versehen ist, und weiterhin, daß die Deckplatte im Deckplattenrahmen mittels an deren Umrißkanten umfangsverteilt angeordneter kleiner Klemmpratzen leicht lösbar befestigt ist.

Ein besonders "einbaufreundliches" Merkmal besteht noch darin, daß an der zur mit dem Abluftstutzen für das Lüfteraggregat versehenen Wandfläche rechtwinklig verlaufenden Wandfläche des Lüftergehäuses ein ausbrechbarer Wandteil (Blinddeckel) zur Aufnahme bzw. Montage des Abluftstutzens bei innerhalb des Gehäuses um 90° gedrehtem Lüfteraggregat angeordnet ist.

In der Zeichnung sind Ausführungsbeispiele der Erfindung dargestellt, anhand deren die Erfindung näher erläutert wird.

Es zeigen

Fig. 1 den Abtausensor mit Peltier-Kühler
Fig. 2 Diagramm des zeitlichen Signalverlaufs
Fig. 3 Zeit-Schaltdiagramm
Fig. 4 ein Blockschaltbild
Fig. 5 den Einbaulüfter in Ansicht
Fig. 6 den Einbaulüfter im Querschnitt
Fig. 7 den Einbaulüfter im Querschnitt mit seinen einzelnen Montageplatten
Fig. 8 den Einbaulüfter nach Fig. 7 in perspektivischer Darstellung

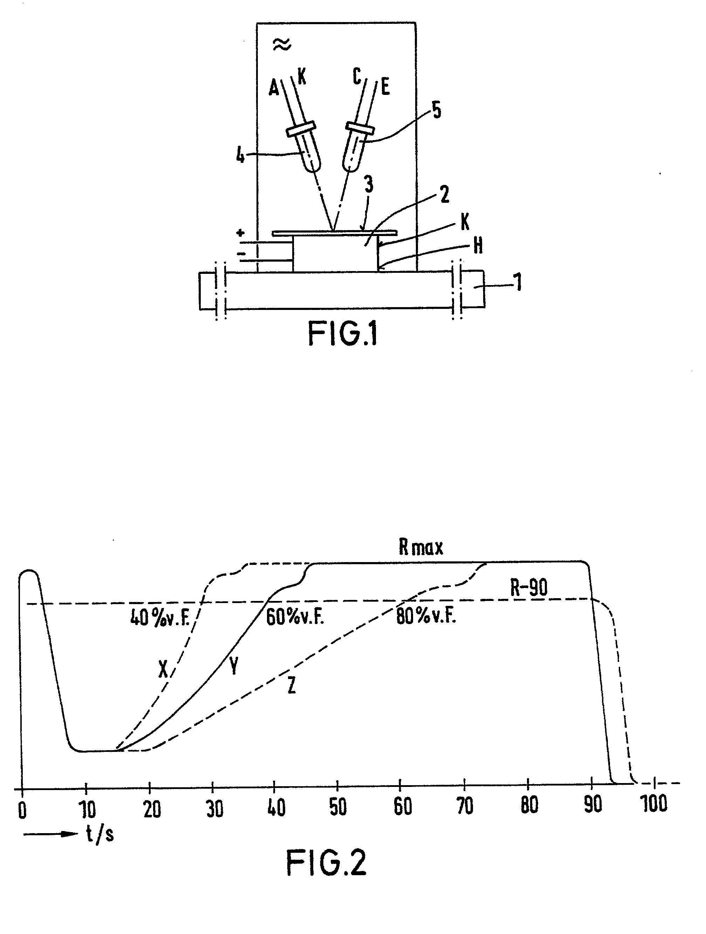

In Fig. 1 besteht der Abtausensor aus einer Unterplatte 1, die als Wärmesenke bzw. Kühlblech dient und auf der das Peltier-Element 2 angeordnet ist, dessen untere kalte Seite mit K und dessen obere heiße Seite mit H gekennzeichnet ist. Auf dem Peltier-Element 2 ist ein optischer Spiegel 3 angeordnet, auf den die Leuchtdiode 4 und der Photoempfänger 5 mit ihren Anschlüssen A-K und C-E gerichtet sind.

Das Diagramm Fig. 2 zeigt den zeitlichen Signalverlauf bei relativen Luftfeuchtigkeitswerten im auf Feuchtigkeit überwachten Raum. Die Kurvenzüge X, Y und Z entsprechen gemessenen Feuchtigkeitswerten von 40%, 60% und 80%, die beispielsweise herausgegriffen sind. Nach dem Einschalten des Peltier-Elements im Zeitpunkt t = 0 erreicht zunächst die Reflexion das mit dem Wert 100% zugrundegelegte Maximum.

Der Reflexions-Wert sinkt infolge der Beschlagbildung innerhalb von ca. 10 s stark ab. Bei Abkühlung des Spiegels 3 unter 0° C bildet sich ein feinkörniger Eisbelag, der trotz zunehmender Dicke einen konstanten Reflexions-Wert hervorruft.

Nach dem Ausschalten der Kühlung bei t = 10 s taut der Beschlag ab und verdunstet, und zwar ist die Verdunstungsdauer je nach der herrschenden relativen Feuchte unterschiedlich lang. Die Abtauzeit liegt bei einer relativen Luftfeuchtigkeit von 40% bei ca. 30 s, von 60% bei ca. 40 s und von 80% bei ca. 75 s.

Von dem Maximalwert der Reflexion von 100% nach dem Einschalten des Peltier-Elements werden als analoger Vergleichswert 90% in einem Speicher festgehalten. Durch die Speicherung von 90% des Maximal-Reflexionswertes R max wird die leichte Kurvenknickung im obersten Bereich der Abtaukurve - wenn der vorhandene Beschlag das Gesichtsfeld der Lichtschranke nicht mehr voll ausfüllt - ausgeschaltet.

Wenn nun beim Abtauen des Beschlags auf dem Spiegel 3 die Abtaukurve - je nach herrschender relativer Luftfeuchtigkeit - entsprechend den Kurvenverläufen X, Y oder Z den gespeicherten 90%-Wert - Kurvenzug R-90 - überschreitet, wird dadurch die Abtauzeitdauer definiert, die mit hoher Genauigkeit einem bestimmten relativen Luftfeuchtigkeitswert entspricht.

Zum Zeitpunkt t = 90 s wird das Peltier-Element und damit der Abtausensor wieder ausgeschaltet. Die Anordnung kann so getroffen sein, daß nach einem bestimmten, voreingestellten Zeitdauer durch Wiedereinschalten des Abtausensors ein neuer Meßzyklus eingeleitet wird.

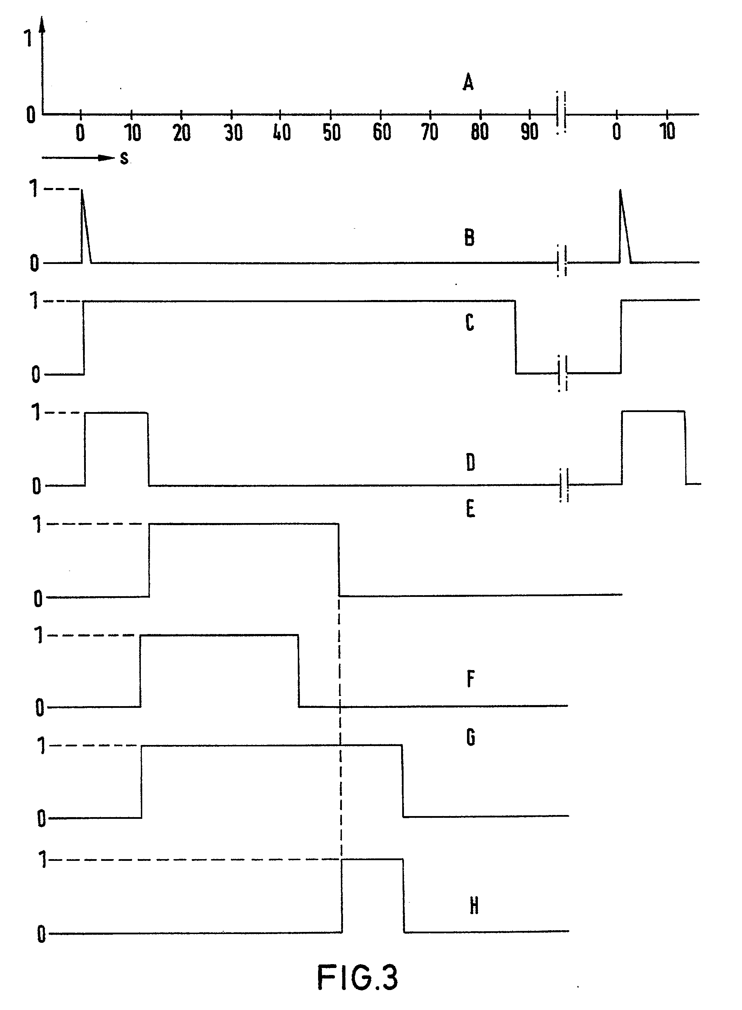

Die Fig. 3 zeigt ein Zeit-Schaltdiagramm, aus dem die grundlegenden Funktionen der Anwendung des Meßverfahrens gemäß Fig. 1 und 2 auf die Aufgabe ersichtlich sind, die relative Luftfeuchtigkeit eines Raumes zu überwachen und den Raum zu entfeuchten. Die Skala A deutet einen externen Zeitgeber an, der sich wiederholend einen 90 s-Zyklus vorgibt. Die Zyklus-Wiederholung ist in gewissen Grenzen einstellbar, beispielsweise kann das Wiederholungsintervall 30, 60 oder 90 Minuten betragen.

Die Kurve B stellt den zu Beginn jedes 90 s-Zyklus durch den Zeitgeber ausgelösten Einschalt-Impuls für den Abtausensor dar, während der Kurvenzug C die Einschaltdauer der gesamten Elektrik der Feuchtigkeitssteuerung während eines Meß- und Steuerzyklus von 90 s zeigt.

Der Kurvenzug D läßt das Ein-und Ausschalten des Peltierkühlers 3 (Fig. 1) und damit dessen Einschaltdauer von 10 s erkennen. Nach Ablauf des Wiederholungsintervalls wird durch einen neuen Startimpuls - Kurve B - die Elektrik - Kurve C - wieder eingeschaltet, und der Peltier-Kühler 3 (Fig. 1) ebenfalls wieder für 10 s aktiviert.

Die Anwendung des erfindungsgemäßen Meß- und Steuerverfahrens zum Entfeuchten geschlossener Räume hat auch die Möglichkeit zum Gegenstand, einen Sollwert der gewünschten relativen Luftfeuchtigkeit, bzw. einen oberen Grenzwert vorzugeben, welcher in einem Abtau-Sollzeitwert dargestellt und an einem Abtau-Sollzeitgeber eingestellt wird. Der Kurvenzug E stellt einen am Abtau-Sollzeitgeber eingestellten Abtau-Sollzeitewert von 40 s dar, der einer relativen Luftfeuchte von 60% entspricht.

Der Kurvenzug F läßt einen Abtau-Ist-Zeitwert von ca. 32 s erkennen, der eine relativen Luftfeuchtigkeit von unter 60% anzeigt, nämlich ca. 44%. Demgegenüber zeigt die Kurve G einen Abtau-Ist-Zeitwert von etwa 62 s, welcher einer relativen Luftfeuchtigkeit von ca. 80% entspricht. Der gemessene Abtau-Ist-Zeitwert liegt um 22 s über dem Abtau-Sollzeitwert von 40 s, und er kann daher als Start-Impulsgeber und Steuersignal für ein Lüfterrelais dienen, wie dies die Kurve H anzeigt. Dabei kann die Schaltung so vorgesehen sein, daß das Relais für die Lüftersteuerung abschaltet, wenn der Abtau-Sollzeitwert von 40 s erreicht ist, was dem eingestellten Wert der relativen Luftfeuchtigkeit entspricht.

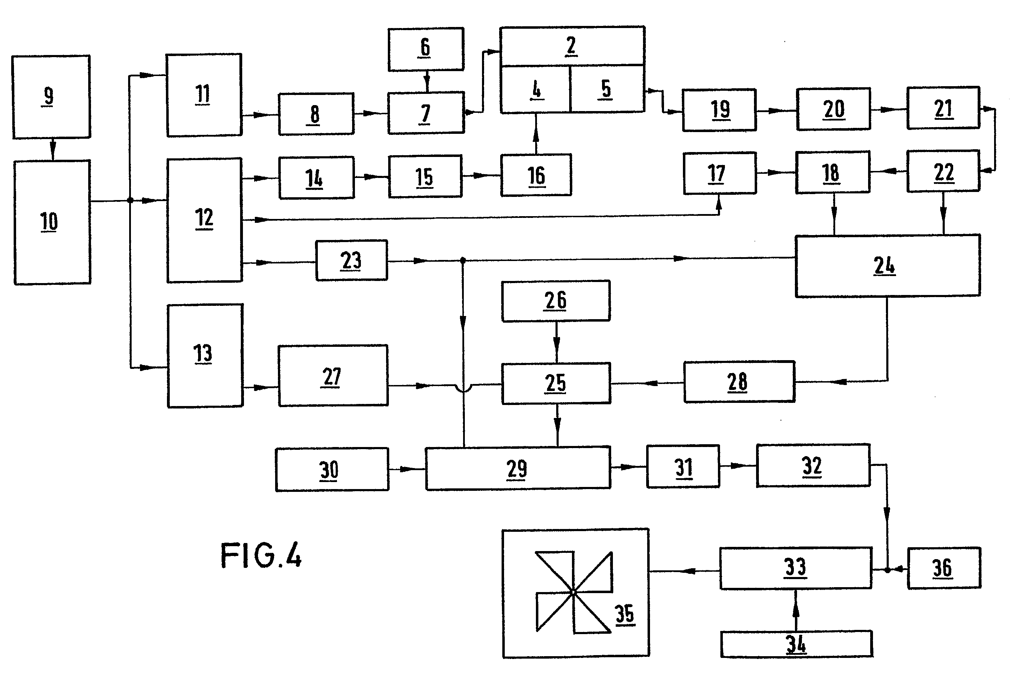

In Fig. 4 ist ein Blockschaltbild für die Anwendung des erfindungsgemäßen Meßverfahrens der relativen Luftfeuchtigkeit zum Entfeuchten geschlossener Räume angegeben. Der Peltierkühler 2 wird von einem Netzgerät 6 mit Strom versorgt, wobei die Stromversorgung vom Kühlzeitgeber 11 über den Treiber 7 gesteuert ist. Mit 9 ist das Netzgerät für die gesamte Elektronik bezeichnet, welches einen Zeitgeber 10 für das Wiederholungsintervall für den Meßzyklus versorgt, der auf eine unterschiedlich lange Intervalldauer einstellbar ist, beispielsweise 60 Minuten.

Dem Wiederholungsintervall-Zeitgeber 10 nachgeschaltet sind drei weitere Taktgeber, und zwar der Kühlzeitgeber 11 für die Einschaltdauer des Peltier-Kühlers 2 mit dem Schaltgerät 8. Weiterhin ist ein Meßzeitgeber 12 angeschlossen, der mit dem Start der Kühlzeit von 10 s zugleich die vorgegebene Meßzeit von 90 s steuert.

Außerdem ist an den Wiederholungsintervall-Zeitgeber 10 der Abtau-Sollzeitgeber 13 angeschlossen, der auf eine wählbare Abtau-Sollzeit einstellbar ist, die den gewünschten relativen Luftfeuchte entspricht, beispielsweise auf 40 s entsprechend ca. 60% relativer Luftfeuchtigkeit.

Der erwähnte Meßzeitgeber 12 steuert eine Reihe von Funktionen, und zwar bewirkt er über einen Lichtquellenschalter 14, den Modulator 15 und den Treiber 16 das Ein-und Ausschalten der IR-Lichtquelle 4. Weiterhin steht der Meßzeitgeber über ein Reset 17 mit dem Speicher 18 in Verbindung, welcher zur Analogspeicherung des Maximal-Reflexionswertes, d.h. von 90% dieses Wertes - R 90 - dient. Diesem Speicher 18 wird ferner das Abtausignal des Photoempfängers 5 über einen Puffer 19, einen Verstärker 20, Filter 21 und Gleichrichter 22 zugeführt.

Schließlich setzt der Meßzeitgeber 12 noch das Zeit-Vergleichssystem in Gang, mittels welchem der Soll-Ist-Zeitvergleich für die Abtauzeit durchgeführt wird und eine Entfeuchtungsmaßnahme, im Ausführungsbeispiel ein Lüfter gestartet werden kann.

Vom Meßzeitgeber 12 wird der Vergleichssystem-Schalter 23 betätigt und der +/- Komparator 24 eingeschaltet, der die Reflexions-und Transmissions-Signale in ihrem Vorzeichen unterscheidet und diese aus dem Speicher 18 und dem Gleichrichter 22 erhält.

Der von der Konstantstromquelle 26 gespeiste Integrator 25 erhält vom Abtau-Sollzeitgeber 13 über Schalter 27 die Abtau-Sollzeit und über Schalter 28 die Abtau-Ist-Vergleichszeit (vorzeichen- und signalhöhenmäßig vergleichbar) eingesteuert und gibt diese an den Soll/Ist-Zeitwertvergleicher 29, welcher den Steuerimpuls bei festgestellter Istwert-Abweichung auslöst. Um zu vermeiden, so schon bei einer vernachlässigbar geringern Istwertabweichung ein Steuerimpuls ausgelöst wird, ist noch ein Schwellwertgeber 30 vorgeschaltet, der die Signalauslösung bei zu geringen Istwertabweichungen unterdrückt.

Der Soll/Ist-Zeitwertvergleicher 29 leitet das Signal über den Treiber 31 zum Steuerrelais 32 weiter, welches im Ausführungsbeispiel den Lüfter 35 in Betrieb setzt, der vom Netzanschluß 34 über ein Nachlauf-Zeitrelais 33 versorgt wird. Das Nachlauf-Zeitrelais 33 schaltet den Lüfter 35 nach einer wählbaren Zeitdauer wieder ab. Es kann noch ein Lichttaster 36 an das Nachlauf-Zeitrelais 33 angeschlossen sein, durch welches beim Betreten des Raumes und Betätigen des Lichtschalters - beispielsweise in einer Toilette - der Lüfter für die Dauer der Beleuchtungseinschaltung und einen folgenden Nachlauf-Zeitraum der Lüfter eingeschaltet bleibt.

Ein weiteres wesentliches Merkmal der Erfindung ist darin zu sehen, daß die vorbeschriebenen Bau-Elemente in ein standardisiertes Gehäuse eines handelsüblichen Einbau-Lüfters intergriert werden können, ohne daß es einer Vergrößerung oder sonstigen Veränderung eines solchen Gehäuses bedarf.

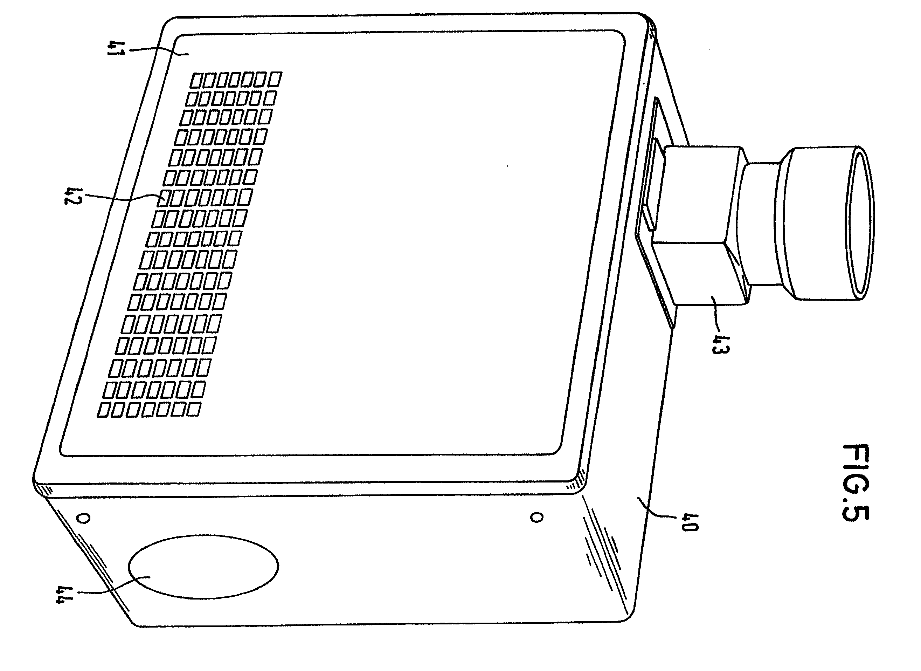

In Fig. 5 ist ein derartiges Lüftergehäuse mit rechteckiger Grundform in Ansicht dargestellt. Mit 40 ist die Wandung des Gehäusekörpers bezeichnet, der von einer abnehmbaren Deckplatte 41 raumseitig abgeschlossen ist. Die Deckplatte 41 ist mit den Zuluftöffnungen 42 versehen. An der Gehäusewandung-Oberseite ist der Abluftstutzen 43 angeordnet.

Mit 44 ist ein ausbrechbarer Wandungsteil mit kreisrundem Querschnitt bezeichnet. Dieser ergibt die Möglichkeit, durch Drehen des Lüfter-Aggregats 45 innerhalb des Gehäuses 40 um 90° den Abluftstutzen 43 an der anderen Gehäuseseite anzuordnen, um das Gerät im Bedarfsfall den baulichen Gegebenheiten besser anpassen zu können.

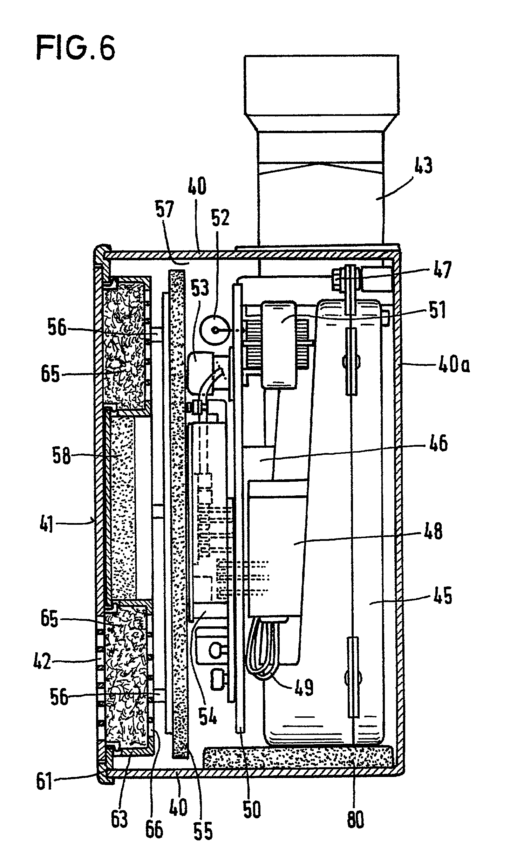

Das gesamte Lüfter-Einbaugerät ist im Querschnitt in Fig. 6 dargestellt. Das eigentliche Lüfter-Aggregat 45 mit dem angeflanschten Antriebsmotor 46 ist mittels Verschraubungen 47 am Gehäuseboden 40a montiert. Mit 48 ist der Anschlußkasten des Lüftermotors 46 bezeichnet, von welchem die Kabelzuführungen 49 in das Motorgehäuse 46 dargestellt sind.

Über dem Lüfter-Aggregat 45 ist die mit 50 bezeichnete Montageplatte für die gesamte in Fig. 1 bis 4 dargestellte und oben beschriebene Regelanordnung einschließlich des Netz-Teils angeordnet.

Hiervon sind in Fig. 6 einige Teile dargestellt, so z.B. der Netz-Trafo 51, ein Kondensator 52 und der mit einer Schutz-Kapselung versehene Feuchtigkeits-Sensor 53.

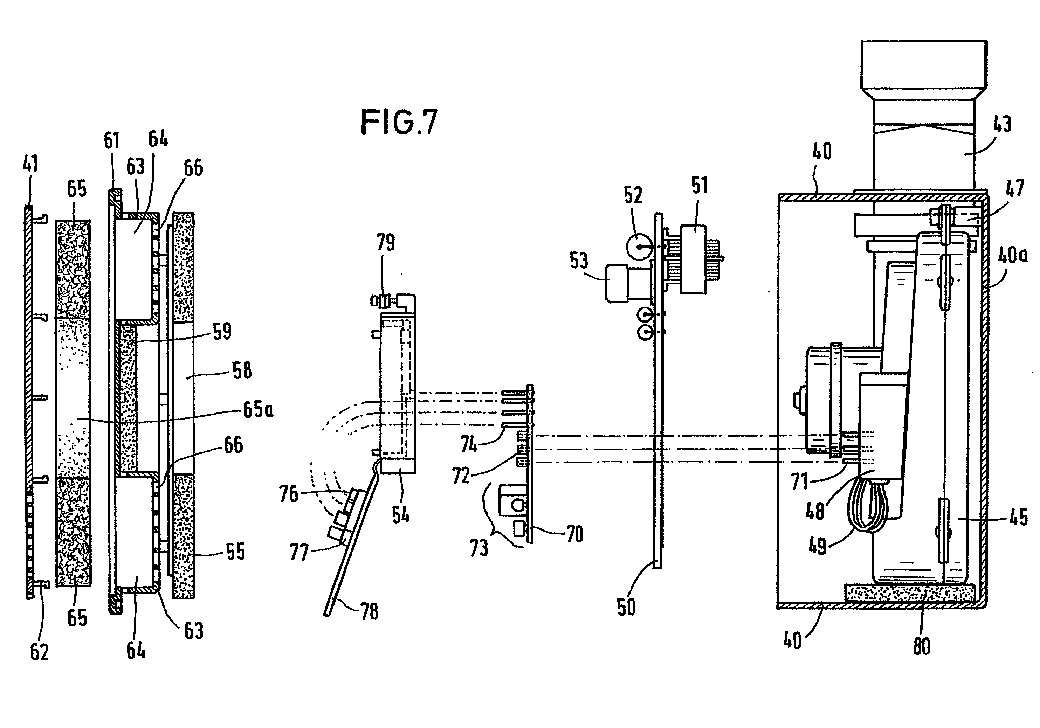

Weiterhin befindet sich auf dieser Platte 50 aufsteckbar der Netzanschlußkasten für das Gesamtgerät 54. Darüber in Richtung zur Deckplatte 41 ist eine Geräusch-Dämmplatte 55 angeordnet, die mittels Halterungen 56 abnehmbar an der Deckplatte 41 befestigt ist. Die Dämmplatte 55 kann eine gewisse Porosität aufweisen, sie weist jedoch einen Umriß auf, der kleiner als als der freie Innenraum des Gehäuses 40 ist, so daß allseitig ein Luftdurchtrittsspalt 57 offen ist. Die Dämmplatte 55 kann - wie Fig. 7 zeigt - im Mittelbereich mit einer Öffnung 58 versehen sein, in welche das Gehäuse des Antriebsmotors 46 hineinragt, sofern es die entsprechende Höhe aufweist. Sowohl aus Fig. 6 wie aus Fig. 7 ist ersichtlich, daß in diesem Fall eine diesen Mittelbereich abdeckende weitere Dämmplatte 59 vorgesehen ist.

Die Deckplatte 41 ist lösbar in einem Deckplatten-Rahmen 61 gehalten, und zwar - wie aus Fig. 7 ersichtlich - mittels mehrerer kleiner Klemm-Pratzen 62. Der Deckplatten-Rahmen 61 ist mit kammerartigen Vertiefungsräumen 64 versehen, die von entsprechend gehäuseartigen Wandungen 63 gebildet und Luftdurchtrittsöffnungen 66 aufweisen. In den kammerartig ausgebildeten Vertiefungsräumen sind passende Teile einer oder mehrerer Luftfilterkörper 65 eingelassen. Im dargestellten Ausführungsbeispiel gem. Fig. 7 ist der Luftfilterkörper 65 als einheitliche Filterplatte mit einer mittigen Ausnehmung 65a ausgebildet. Die Luftfilterkörper 65 können jedoch auch - s. Fig. 6 - mehrteilig ausgebildet sein.

Zur besseren Verdeutlichung ist dieser Aufbau in Fig. 7 in der Weise dargestellt, daß die einzelnen Montage-Ebenen auseinandergezogen sind, so daß der bausatzartige Charakter des Gesamtaggregats besser hervortritt.

Die Einzelheiten des Gehäuses 40, 40a mit dem Lüfter-Aggregat 45 sind in Bezug zur Fig. 6 bereits beschrieben.

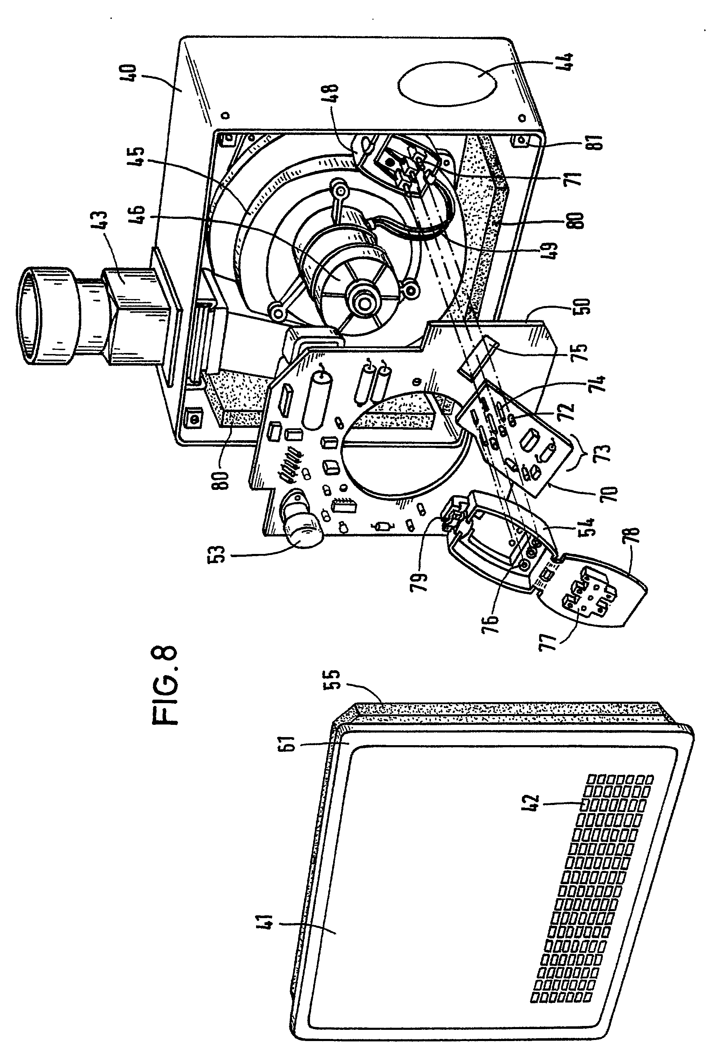

Wie aus Fig. 6 ersichtlich und in Fig. 7 deutlicher dargestellt, dient die Montageplatte 50 als Träger für die Regelanordnung (Mikroprozessoren etc) und des Netzteils, von welchem der Netztrafo 51 dargestellt ist. Ein wesentlicher Bestandteil der Regelanordnung ist der Feuchtigkeitssensor 53. Beim Ausführungsbeispiel ist die Montageplatte 50 mit einer Öffnung 75 (s. Fig. 8) zum Durchtritt der Steckvorrichtung 71 des Motor-Anschlußkastens 48 versehen. Die entsprechenden Steckvorrichtungshülsen 72 sind an der kleinen Montageplatte 70 angeordnet.

Abweichend hiervon besteht auch die Möglichkeit, an der Unterseite der Montageplatte 50 einen Satz Steckvorrichtungshülsen anzuordnen, so daß die Durchtrittsöffnung 75 entfallen kann. In diesem Falle ist eine weitere Steckvorrichtung an der Oberseite der Montageplatte 50 angebracht, die zum Aufstecken der kleinen Montageplatte 70 dient.

Die kleine Montageplatte 70 dient als Träger des sog. Nachlaufrelais, einem Zeitrelais, welches dazu dient, im Normalbetrieb ein zeitlich begrenztes Weiterlaufen des Lüfters auszulösen, wenn die Innenbeleuchtung des zu belüftenden Naßraumes ausgeschaltet oder die Tür wieder geschlossen worden ist.

Das Nachlaufrelais, dessen Bauteile mit dem Bezugszeichen 73 angedeutet sind, ist auf der kleinen Montageplatte 70 getrennt von der Regelanordnung auf der Montageplatte 50 vorgesehen, um einen getrennten Austausch dieses Bauteilsatzes vornehmen zu können, wenn ein Funktionsausfall auftritt.

Die gesamte Anordnung ist vor allem deshalb baukastenartig mit getrennten Bauteilsätzen ausgebildet, um durch weniger geübte und nicht werksseitig speziell ausgebildete Monteure bei Funktionsausfällen entweder die Montageplatte 50 oder, falls erforderlich, beide Montageplatten 50 und 70 auszutauschen. Deshalb sind diese jeweiligen Bauteilsätze mit Steckverbindungen ausgestattet.

Der in Bezug auf Fig. 6 bereits erwähnte Netzanschlußkasten 54 dient zugleich als Kapselung für das Nachlaufrelais 73 auf der kleinen Montageplatte 70 und ist mit Steckerhülsen 76 für die Steckvorrichtung 74 sowie mit Kabelanschlußklemmen 77 für die Netzkabel versehen. Diese sind im dargestellten Ausführungsbeispiel an dem aufklappbaren Deckel 78 des Netzanschlußkastens 54 angeordnet.

Die vorstehend beschriebene und in den Fig. 5 bis 7 schematisch dargestellte Gesamtanordnung des Einbau-Lüftergeräts ist in Fig. 8 nochmals perspektivisch dargestellt. Diese Figur zeigt deutlich den einfachen und leicht montier- und demontierbaren Aufbau des Geräts. Wie daraus ersichtlich ist, kann nach dem Abnehmen der Deckplatte 41 bei freigelegten Montageplatten 70 und 50 zuerst der Netzanschlußkasten mit dem mittels der Vorrichtung 79 festgeklemmten Netzkabel entfernt, darauf die kleine Montageplatte 70 mit dem Nachlaufrelais 73 aus ihrer Steckvorrichtung 71/74 herausgezogen und schließlich die Montageplatte 50 herausgehoben werden.

Wie Fig. 8 ferner zeigt, können auch die Innenflächen der Gehäusewandungen 40 mit Dämmplatten 80 belegt sein, die zugleich als Auflage für die Montageplatte 50 dienen können. Dadurch wird zugleich eine vibrationsfreie Lagerung dieser Platte erreicht. Zur Auflage der Deckplatte 41 bzw. des Deckplattenrahmens 61 können im Eckenbereich des Gehäuses 40 Auflage und Befestigungsnocken 81 angeordnet sein.

## Patentansprüche

1. Verfahren zum Messen der relativen Luftfeuchtigkeit mittels eines durch ein Peltier-Element unter den Taupunkt abgekühlten und dadurch einen Beschlag aufweisenden Metallspiegels oder sonstigen reflektierenden Elements, bei dem durch einen Sensor die Reflexion des Strahlenganges einer Lichtquelle gemessen wird, dadurch gekennzeichnet, daß die Abtauzeit von der Bildung bis zum völligen Verschwinden des Beschlags auf dem Metallspiegel oder sonstigen reflektierenden Elements als indirektes, jedoch proportionales Maß für die Ist-Luftfeuchtigkeit mit der Normaldauer des Abtauvorganges bei einer vorgewählten, gewünschten relativen Feuchtigkeit verglichen und durch die so ermittelte Zeitdifferenz ein Steuersignal zum Einschalten und Regeln von Lüftungs- und/oder Beheizungsvorrichtungen ausgelöst wird.

2. Verfahren nach Anspruch 1 dadurch gekennzeichnet, daß mit dem Ablauf der Abkühlzeit des Peltier-Elements ein Zeitgeber für die Normaldauer des Abtauvorganges für die vorgewählte Feuchtigkeit gestartet und die Normaldauer in einen Vergleicher eingegeben wird, der nach Eingabe der ermittelten tatsächlichen aktuellen Abtauzeit bei Überschreiten der Normaldauer das Steuersignal auslöst.

3. Verfahren nach den Ansprüchen 1 und 2 dadurch gekennzeichnet, daß ein mit der heißen Seite auf einer Wärmeableitung angeordnetes und an seiner kalten Oberseite einen Metallspiegel tragendes Peltier-Element der Strahlung einer Lichtquelle ausgesetzt wird, und daß die Reflexstrahlung einen präzise im Reflexwinkel angeordneten Fotoempfänger trifft.

4. Verfahren nach den Ansprüchen 1 und 2 dadurch gekennzeichnet, daß als Sensor ein von einem Peltier-Element direkt kühlbarer Fotodetektor dient, der der Lichtquelle gegenübersteht.

5. Verfahren nach einem oder mehreren der Ansprüche 1 bis 4 dadurch gekennzeichnet, daß als Lichtquelle eine Leuchtdiode im Wellenlängenbereich zwischen etwa 0,8 und 2,8 µm benutzt wird.

6. Verfahren nach Anspruch 5 dadurch gekennzeichnet, daß die Infrarot-Emission eine Wellenlänge von 0,95 µm aufweist.

7. Verfahren nach Anspruch 5 dadurch gekennzeichnet, daß zur verzögerungsfreien Erfassung der absoluten Ist-Feuchte die Wellenlänge entsprechend den Absorptionsstellen bei den Wasserbanden gewählt wird.

8. Verfahren nach einem oder mehreren der Ansprüche 1 bis 7 dadurch gekennzeichnet, daß die Lichtquelle zur Abtastung des Beschlages optisch gefiltert und elektrisch in einem Frequenzbereich moduliert wird, der weit oberhalb des Störfrequenzspektrums der üblichen Lichtquellen, Lampen und Leuchtstoffröhren liegt, und daß auch die Empfängerseite elektronisch zur Unterdrückung von Störlicht oder sonstigen Störfrequenzen gefiltert wird.

9. Verfahren nach einem oder mehreren der Ansprüche 1 bis 8 dadurch gekennzeichnet, daß eine allmähliche Staubbildung auf dem Spiegel oder dem Fotodetektor und/oder ein alterungsbedingter Empfindlichkeitsabfall der Lichtquelle durch Messung und Speicherung des Reflexionswertes zu Anfang bei Inbetriebnahme und bei jedem darauffolgenden durch den Taktgeber ausgelösten Meßzyklus kompensiert wird, so daß durch Vergleich mit dem jeweils aktuellen feuchtigkeitsbedingten Reflexionswert für jeden Meßzyklus die Anfangsbedingungen als Korrekturwert in die Signalverarbeitung übernommen werden.

10. Verfahren nach einem oder mehreren der Ansprüche 1 bis 9 dadurch gekennzeichnet, daß das Ausschaltsignal für die Vorrichtungen zur Beeinflussung der relativen Luftfeuchte von einem wählbar auf ein Zeitintervall eingestellten elektronischen Nachlaufrelais ausgelöst wird, welches deren Einschaltdauer über den Zeitpunkt des Erreichens des Soll-Wertes der relativen Luftfeuchte verlängert.

11. Vorrichtung zur Durchführung des Verfahrens nach einem oder mehreren der Ansprüche 1 bis 10 mit einem einen unter den Taupunkt abkühlbaren Metallspiegel oder ein sonstiges reflektierendes Element aufweisenden Peltier-Element und bei dem durch einen Sensor die Reflexion des Strahlenganges einer Lichtquelle gemessen wird, gekennzeichnet durch eine Zeitmeßvorrichtung zum Messen der Abtauzeit von der Bildung bis zum völligen Verschwinden eines von der herrschenden Luftfeuchtigkeit hervorgerufenen Beschlags auf dem Metallspiegel (3) oder sonstigen reflektierenden Element, und einem Vergleicher zum Vergleichen der gemessenen Abtauzeit mit einem vorwählbaren, der gewünschten relativen Feuchtigkeit entsprechenden Zeitwert für die Normaldauer des Abtauvorganges sowie einem Differenzierglied zum Auslösen eines der ermittelten Zeitdifferenz entsprechenden Signals zum Einschalten und/oder Regeln von Lüftungs- und/oder Beheizungsvorrichtungen.

12. Vorrichtung nach Anspruch 11, gekennzeichnet durch einen Zeitgeber, der auf die der gewünschten relativen Luftfeuchte entsprechende Normalzeitdauer der Abtauzeit einstellbar und der mit Beginn der Abkühlzeit des Peltier-Elements in Tätigkeit setzbar und durch den nach Eingabe der ermittelten tatsächlichen aktuellen Abtauzeit bei Überschreiten der Normaldauer ein Steuersignal auslösbar ist.

13. Vorrichtung nach Anspruch 11, dadurch gekennzeichnet, daß das Peltier-Element (2) auf dem Boden eines Leistungstransistors (1) angeordnet ist und an seiner Oberseite einen der Strahlung einer Lichtquelle (4) ausgesetzten Metallspiegel (3) trägt, und daß zur Aufnahme der Reflex-Strahlung im Reflexwinkel ein Fotoempfänger (5) angeordnet ist.

14. Vorrichtung nach Anspruch 11, dadurch gekennzeichnet, daß ein der Lichtquelle (4) gegenüberstehend angeordneter, vom Peltier-Element (2) direkt gekühlter Fotoempfänger (5) als Sensor ausgebildet ist.

15. Vorrichtung nach Anspruch 11, gekennzeichnet durch eine Leuchtdiode im Wellenlängenbereich zwischen etwa 0,8 und 2,8 μm als Lichtquelle.

16. Vorrichtung nach Anspruch 11, gekennzeichnet durch optische Filterung und elektrische Modulierung der Lichtquelle (4) in einem Frequenzbereich, der weit oberhalb des Störfrequenzspektrums der üblichen Lichtquellen, Lampen, Leuchtstoffröhren u. dgl. liegt, und ferner durch elektronische Filterung der Empfängerseite (5) zur Unterdrückung von Störlicht oder sonstigen Störfrequenzen.

17. Vorrichtung nach Anspruch 11, gekennzeichnet durch Kompensation einer allmählichen Staubbildung auf dem Spiegel (3) oder dem Fotodedektor (5) und/oder eines alterungsbedingten Empfindlichkeitsabfalles der Lichtquelle (4) durch Messung und Analogspeicherung des Reflexionswertes zu Anfang bei Inbetriebnahme und vor jedem weiteren Einschalttakt und Eingabe des so ermittelten Reflexionsabfalles für den Folge-Meßzyklus als Korrekturwert in die folgende Signalverarbeitung.

18. Vorrichtung nach Anspruch 11, gekennzeichnet durch ein auf ein wählbares Zeitintervall einstellbares elektronisches Nachlaufrelais, welches durch das Ausschaltsignal für die Vorrichtung zur Beeinflussung der relativen Luftfeuchte, beispielsweise einen Lüfter auslösbar ist und die Einschaltdauer des betreffenden Gerätes über den Zeitpunkt des Erreichens des Soll-Wertes der relativen Luftfeuchte verlängert.

19. Anwendung des Verfahrens nach den Ansprüchen 1 bis 10 und der Vorrichtung nach den Ansprüchen 11 bis 18, zur in einstellbaren Zeitintervallen aufeinanderfolgenden Bestimmung der jeweils aktuell herrschenden relativen Luftfeuchtigkeit in Naßräumen wie Dusch- und Badezimmern, Schwimmhallen und auch anderen, beispielsweise gewerblich genutzten, höheren Feuchtigkeitsgraden ausgesetzten Räumen, insbesondere während länger andauernder Nichtbenutzung dieser Räume, und zur selbsttätigen Verringerung bzw. Einregelung der relativen Luftfeuchte in diesen Räumen auf einen voreingestellten Wert.

20. Einbaulüfter unter Benutzung der Vorrichtungen nach den Ansprüchen 11 bis 18 und insbesondere zur Anwendung in Räumen zu Zwecken gemäß Anspruch 19, gekennzeichnet durch ein vorzugsweise rechteckiges Lüftergehäuse (40) mit einem darin angeordneten Lüfter-Aggregat (45) mit angeflanschtem Antriebsmotor (46), in welchem zwischen diesem und der das Gehäuse (40) raum- und zuluftseitig abschließenden, mit Zuluftöffnungen (42) versehenen Deckplatte (41) mindestens eine Montageplatte (50) angeordnet ist, an und auf welcher die gesamte oder die wesentlichen Teile der Regelanordnung und der Vorrichtungen nach den Ansprüchen 11 bis 18 einschließlich der erforderlichen Verdrahtung und des Netzteils angebracht sind.

21. Einbaulüfter nach Anspruch 20, dadurch gekennzeichnet, daß die Montageplatte (50) mit ihren Vorrichtungen und Anordnungen nach den Ansprüchen 11 bis 18 mittels einer Steckvorrichtung (71) mit dem Motoranschlußkasten (48) des Lüfteraggregats (45) leicht lösbar verbunden ist und aus der Steckvorrichtung (71) nach Entfernen der zuluftseitigen Deckplatte (41) des Lüftergehäuses (40) herausziehbar und im Bedarfsfalle durch eine Austausch-Montageplatte (50) ersetzbar ist.

22. Einbaulüfter nach den Ansprüchen 20 und 21, dadurch gekennzeichnet, daß das Nachlaufrelais (73) auf einer besonderen kleinen, für sich herausnehmbaren Montageplatte (70) angeordnet ist, welche ebenfalls mittels Steckvorrichtungen (71, 72) mit der großen Montageplatte (50) bzw. dem Motoranschlußkasten (48) elektrisch verbindbar und an der großen Montageplatte (50) lösbar angebracht ist.

23. Einbaulüfter nach den Ansprüchen 20 bis 22, dadurch gekennzeichnet, daß auf der großen Montageplatte (50) oder auf der kleinen Montageplatte (70) ein Netzanschlußkasten (54) mittels einer weiteren Steckvorrichtung (74, 76) steckbar aufgesetzt ist, dessen Gehäuse zugleich der Kapselung für das auf der kleinen Montageplatte (70) angeordnete Nachlaufrelais (73) dient.

24. Einbaulüfter nach den Ansprüchen 20 bis 23 dadurch gekennzeichnet, daß die zuluft- und raumseitige Deckplatte (41) des Lüftergehäuses (40) in einem Deckplattenrahmen (61) herausnehmbar befestigt und mit kammerartigen Vertiefungen (64) zur Aufnahme von entsprechend passend bemessenen Luftfilterkörpern (65) versehen ist.

25. Einbaulüfter nach Anspruch 20, dadurch gekennzeichnet, daß die Deckplatte (41) im Deckplattenrahmen (61) mittels an deren Umrißkanten umfangsverteilt angeordneter kleiner Klemmpratzen (62) leicht lösbar befestigt ist.

26. Einbaulüfter nach Anspruch 20, dadurch gekennzeichnet, daß an der zur mit dem Abluftstutzen (43) für das Lüfteraggregat (45) versehenen Wandfläche rechtwinklig verlaufenden Wandfläche (40) des Lüftergehäuses ein ausbrechbarer Wandteil d.h. Blinddeckel (44) zur Aufnahme bzw. Montage des Abluftstutzens (43) bei innerhalb des Gehäuses um 90° gedrehtem Lüfteraggregat (45) angeordnet ist.

## Revendications

1. Procédé pour la mesure de l'humidité relative de l'air par un miroir métallique ou autre élément réfléchissant qui, après son refroidissement au-dessous du point de rosée au moyen d'un élément Peltier, est couvert d'une buée et auquel la réflexion d'une marche des rayons d'une source lumineuse est mesurée par un palpeur, dûment caractérisé par ce que le délai de décondensation, dès la formation de la buée sur le miroir métallique ou autre réflecteur jusqu'à sa disparition entière, est comparé, en tant que valeur indirecte mais proportionnelle pour l'humidité réelle de l'air, avec la durée normale du processus de décondensation à une humidité relative désirée et présélectionnée, et qu'un signal de commande pour la mise en fonctionnement et le réglage des dispositifs de ventilation et/ou de chauffage est déclenché par la différence de temps ainsi déterminée.

2. Procédé selon revendication 1 dûment caractérisé par ce qu'à la fin du temps de refroidissement de l'élément Peltier, une horloge de contact pour la durée normale du processus de décondensation concernant 1, humidité préablement choisie se démarre, et que la durée normale s'entre dans un comparateur qui, après l'introduction du temps réel de décondensation, déclenchera le signal de commande au dépassement de la durée normale.

3. Procédé selon les revendications 1 et 2 dûment caractérisé par ce qu'un élément Peltier, disposé avec son côté chaud sur un dispositif de dissipation de chaleur et portant, à sa face supérieure froide, un miroir métallique, s'expose à la radiation d'une source lumineuse, radiation réfléchie sur un photodétecteur monté précisément à l'angle de réflexion.

4. Procédé selon les revendications 1 et 2 dûment caractérisé par ce qu'un photodétecteur, opposé à la source lumineuse, qui peut être directement refroidi par un élément Peltier, sert de palpeur.

5. Procédé selon l'une ou plusieurs des revendications 1 à 4 dûment caractérisé par ce qu'une diode lumineuse ayant une gamme de longueur d'ondes de 0,8 à 2,8 µm env., s'utilise comme source de lumière.

6. Procédé selon revendication 5 dûment caractérisé par ce que le rayonnement infrarouge présente une longueur d'onde de 0,95 µm.

7. Procédé selon revendication 5 dûment caractérisé par ce que la longueur d'onde se choisit suivant les endroits d'absorption des bandes d'eau pour assurer la saisie instantanée de l'humidité (réelle) absolue.

8. Procédé selon l'une ou plusieurs des revendications 1 à 7 dûment caractérisé par ce qu'aux fins de détection de la buée, la source de lumière se filtre optiquement et se module électriquement dans une bande de fréquences qui est située bien au-dessus de la gamme de fréquences perturbatrices des sources de lumiere, lampes n et tubes fluorescents usuels, et qu'également le coté détecteur se filtre électroniquement pour supprimer une éventuelle lumière parasite ou d'autres interférences.

9. Procédé selon l'une ou plusieurs des revendications 1 à 8 dûment caractérisé par ce qu'un dépôt de poussière graduel sur le miroir ou le photodétecteur et/ou qu'un décroissement de sensibilité respectivement du pouvoir de la source de lumière dû au vieillissement, est compensé par la mesure et la mémorisation de la valeur de réflexion au début de la mise en service et à chaque cycle de mesure suivant, déclenché par rythmeur, de sorte que grâce à la comparaison avec la valeur de réflexion actuelle qui est fonction de l'humidité, les conditions initiales seront incluses en tant que valeurs de correction, dans le traitement des signaux pour chaque cycle de mesure.

10. Procédé selon l'une ou plusieurs des revendications 1 à 9 dûment caractérisé par ce que le signal de coupure destiné aux dispositifs affectant l' humidité relative de l'air se déclenche par un relais de poursuite électronique, réglé sur un certain intervalle de temps, qui prolongera leur durée de fermeture au-delà du moment où la valeur de consigne de l'humidité relative de l'air a été atteinte.

11. Dispositif pour l'exécution du procédé selon l'une ou plusieurs des revendications 1 à 10 comportant un élément Peltier muni d'un miroir métallique qui peut se refroidir au-dessous du point de rosée, ou d'un autre élément réfléchissant, et avec lequel la réflexion de la marche des rayons d'une source de lumière se mesure à l'aide d'un palpeur, dûment caractérisé par un système pour la mesure du temps de décondensation, soit de la formation jusqu'à la disparition entière de la buée sur un miroir métallique (3) ou autre élément réfléchissant, produite par l'humidité d'air existante, par un comparateur qui procède à la comparaison du temps de décondensation mesuré avec une valeur de temps présélectionnable et correspondant à l'humidité relative désirée pour la durée normale du processus de décondensation, et par un circuit différenciateur qui déclenchera un signal pour la fermeture et/ou le réglage des dispositifs de ventilation et ou de chauffage, signal s'accordant avec la différence de temps déterminée.

12. Dispositif selon revendication 11 dûment caractérisé par une horloge de contact qui peut être réglée sur la durée normale de décondensation correspondant à l'humidité relative de l'air désirée qui est susceptible d'être mise en marche au début du temps de refroidissement de l'élément Peltier, et qui déclenchera un signal de commande après l'entrée du temps de décondensation actuel déterminé, au moment où la durée normale sera dépassée.

13. Dispositif selon revendication 11 dûment caractérisé par ce que l'élément Peltier (2) est disposé au fond d'un transistor de puissance (1), qu'il porte, à son coté supérieur, un miroir métallique (3) exposé à la radiation d'une source de lumière (4) et qu'un photodétecteur (5) a été installé à l'angle de réflexion pour recevoir la radiation réfléchie.

14. Dispositif selon revendication 11 dûment caractérisé par ce qu'un photodétecteur (5), opposé a la source lumineuse (4) et refroidi directement par l'élément Peltier (2), a été conçu comme palpeur.

15. Dispositif selon revendication 11 dûment caractérisé par une diode lumineuse fonctionnant comme source de lumière, diode ayant une gamme de longueur d'ondes entre 0,8 et 2,8 µm env.

16. Dispositif selon revendication 11 dûment caractérisé par un filtrage optique et une modulation électrique de la source de lumière (4) dans une bande de fréquences toute au-dessus de la gamme de fréquences perturbatrices des sources de lumière, lampes, tubes fluorescents usuels, etc. ainsi qu'en outre, par le filtrage électronique du coté détecteur (5) pour supprimer une éventuelle lumière parasite ou d'autres interférences.

17. Dispositif selon revendication 11 dûment caractérisé par la compensation d'un dépôt de poussière graduel sur le miroir (3) ou sur le photodétecteur (5) et/ou d'un décroissement de sensibilité respectivement du pouvoir à cause du vieillissement de la source de lumière (4) par mesure et mémorisation analogique de la valeur de réflexion au début de la mise en fonctionnement et avant chaque autre impulsion de rythme pour fermeture, et par l'entrée de la valeur de décroissement de réflexion ainsi déterminée en tant que valeur de correction pour le prochain cycle de mesure, dans l'ensemble effectuant le traitement des signaux suivant.

18. Dispositif selon revendication 11 dûment caractérisé par un relais de poursuite électronique qui peut être réglé sur un intervalle de temps et déclenché par le signal de coupure destiné au dispositif affectant l'humidité relative de l'air, p.ex. un ventilateur, relais prolongeant la durée de fermeture de ce dispositif au-delà du moment où la valeur de consigne de l'humidité relative de l'air a été atteinte.

19. Application du procédé selon les revendications 1 à 10 et du dispositif selon les revendications 11 à 18 pour déterminer consécutivement, en des intervalles de temps présélectionnables, l'humidité relative de l'air actuelle dans des locaux humides, tels que salles de douche et de bain, piscines et aussi des locaux à usage industriel présentant des degrés d'humidité plus élevés, particulièrement pendant un nonusage de longue durée de ces locaux, et pour y réduire ou régler l'humidité relative de l'air automatiquement sur une valeur présélectionnée.

20. Ventilateur pour montage dans le bâti et pour utilisation des dispositifs selon les revendications 11 à 18, destiné, particulièrement, à l'application dans des locaux répondant aux objets de la revendication 19, dûment caractérisé par un bâti (40) préférablement rectangulaire et comportant le groupe de ventilateur (45) avec moteur d'entraînement (46) y bridé, dans lequel, entre celui-ci et la plaque de recouvrement (41) avec ses ouvertures de prise d'air (42) qui renferme le bâti du côté espace et prise d'air, est disposé au moins une seule plaque de montage (50) portant la totalité du système de réglage et des dispositifs selon les revendications 11 à 18 ou leurs parties essentielles, y compris le câblage nécessaire et le bloc d'alimentation.

21. Ventilateur pour montage dans le bâti selon revendication 20 dûment caractérisé par ce que la plaque de montage (50) avec ses dispositifs et systèmes selon les revendications 11 à 18 a été fixée d'une manière facilement détachable, à la boîte de jonction (48) pour moteur du groupe de ventilateur (45), moyennant un connecteur (71), plaque qui pourra être retirée du connecteur (71) après le démontage de la plaque de recouvrement (41), côté prise d'air, du bâti de ventilateur (40), et qui pourra s'échanger en cas de besoin contre une plaque de montage (50) de remplacement.

22. Ventilateur pour montage dans le bâti selon les revendications 20 et 21 dûment caractérisé par ce que le relais de pour suite (73) est disposé sur une plaquette de montage (70), séparée et amovible, qui pourra être électriquement reliée à la plaque de montage (50) respectivement à la boîte de jonction (48) pour moteur, également à l'aide des connecteurs (71, 72), plaquette se montant de manière détachable à la plaque de montage (50).

23. Ventilateur pour montage dans le bâti selon les revendications 20 à 22 dûment caractérisé par ce qu'un coffret de branchement au réseau (54) a été installé sur la plaque de montage (50) ou sur la plaquette (70) à l'aide d'un autre connecteur (74, 76), coffret dont l'enveloppe sert en même temps à enrober le relais de poursuite (73) qui se trouve sur la plaquette de montage (70).

24. Ventilateur pour montage dans le bâti selon les revendications 20 à 23 dûment caractérisé par ce que la plaque de recouvrement (41), côté espace et prise d'air, du bâti de ventilateur (40), a été fixée de manière amovible dans son cadre (61), plaque ayant des creux (64) sous forme de chambre pour recevoir des éléments d'épuration (65) parfaitement adaptés.

25. Ventilateur pour montage dans le bâti selon revendication 20 dûment caractérisé par ce que la plaque de recouvrement (41) a été fixée d'une manière facilement détachable, dans son cadre (61) moyennant de petites griffes de serrage (62) réparties sur ses bords périphériques.

26. Ventilateur pour montage dans le bâti selon revendication 20 dûment caractérisé par ce que la paroi (40) du bâti de ventilateur, laquelle a été montée à angle droit par rapport à la paroi munie de la tubulure d'évacuation d'air (43) pour le groupe de ventilateur (45), présente une partie enfonçable, soit un recouvrement aveugle (44) pour recevoir la tubulure d'évacuation d'air (43) ou y permettre son montage en cas de groupe de ventilateur (45) tourné par 90° dans le bâti.

## Claims

1. Method for measuring the relative humidity of air using a metal mirror or another reflecting component, cooled by a Peltier element down to a temperature below the dew point and thereby showing a mist, where the reflection of a path of rays coming from a light source is measured by a sensor, characterized in that the demisting time, viz. from the formation up to the entire disappearance of the mist on the metal mirror or other reflecting component, is compared, as an indirect but proportional measured value for the actual humidity of air, with the normal duration of the demisting process at a desired preset relative humidity of air, and further that a control signal for controlling and closing any fans and/or heaters is released by the time difference thus determined.

2. Method acc. to claim 1 characterized in that at the end of the cooling period of the Peltier element, a timer for the normal duration of the demisting process at the preset humidity is started and further that the value of this normal duration is entered into a comparator which, after the entry of the actual demisting time determined, will release the control signal on exceeding the normal duration.

3. Method acc. to claims 1 and 2 characterized in that a Peltier element of which the hot side has been fitted to a heat transfer component and of which the cold upper side carries a metal mirror, is exposed to the radiation from a light source and further that the reflected radiation hits a photodetector which has precisely been arranged at the angle of reflection.

4. Method acc. to claims 1 and 2 characterized in that a photodetector, directly coolable by a Peltier element and opposite to the light source, functions as a sensor.

5. Method acc. to one or several of the claims 1 to 4 characterized in that a light emitting diode having a wave range from approx. 0,8 to 2,8 µm is used as a light source.

6. Method acc. to claim 5 characterized in that the infrared radiation shows a wave length of 0,95 µm.

7. Method acc. to claim 5 characterized in that the wave length is chosen in accordance with the absorption spots of the water bands to ensure the instantaneous acquisition of the absolute (actual) humidity.

8. Method acc. to one or several of the claims 1 to 7 characterized in that the light source for the detection of the mist is optically filtered and electrically modulated within a frequency band which is situated far above the interfering frequency spectrum of the usual light sources, lamps and fluorescent tubes and further that also the detector side is electronically filtered to suppress any stray light or other interfering frequencies.

9. Method acc. to one or several of the claims 1 to 8 characterized in that a gradual dust collection on the mirror or on the photodetector and or an age-conditioned decrease of sensitivity respectively power of the light source is compensated by measuring and storing the reflection value on starting operation and with each subsequent measuring cycle released by the clock generator, thus the initial conditions are entered, for each measuring cycle, into the signal processing as a correcting value by comparison with the respective actual and humidity-conditioned reflection value.

10. Method acc. to one or several of the claims 1 to 9 characterized in that the breaking signal for the devices to control the relative humidity of air is released by an electronic follow-up relay set to a period which will extend their duty cycle beyond the moment when the nominal value of the relative humidity of air has been reached.

11. Apparatus for the implementation of the method acc. to one or several of the claims 1 to 10 by means of a Peltier element having a metal mirror or another reflecting component that can be cooled below the dew point, and with said element the reflection of a path of rays from a light source is measured by a sensor, characterized by a timer for the determination of the demisting time, i.e. from the formation up to the entire disappearance of the mist on the metal mirror (3) or another reflecting component, due to the prevailing humidity of air, and further more by a comparator to compare the demisting period to a preset time value corresponding to the desired relative humidity for the normal duration of the by a differentiating circuit for the release of a signal based on the time difference ascertained and destined for the closing operation and or control of fans or heaters.

12. Apparatus acc. to claim 11 characterized by a timer that is settable to the normal duration of the demisting process adequate to the desired relative humidity, which can be started at the beginning of the cooling time of the Peltier element and by which, after entry of the actual demisting time determined, a control signal can be released on exceeding the normal duration.

13. Apparatus acc. to claim 11 characterized in that on the bottom of a power transistor (1) the Peltier element (2) has been arranged, carrying on its upper side a metal mirror (3) exposed to the radiation from a light source (4) and further in that a photodetector (5) has been fitted at the reflecting angle to receive the reflected radiation.

14. Apparatus acc. to claim 11 characterized in that a photodetector (5), directly cooled by the Peltier element (2) and designed as a sensor, has been arranged opposite to the light source (4).

15. Apparatus acc. to claim 11 characterized by a light emitting diode in the wave range from abt. 0,8 to 2,8 µm as a light source.

16. Apparatus acc. to claim 11 characterized by an optical filtering and electrical modulation of the light source (4) within a frequency band far above the spectrum of interfering frequencies of usual light sources, lamps, fluorescent tubes and similar items, and further by an electronic fitering of the detector side (5) to suppress any stray light or other interfering frequencies.

17. Apparatus acc. to claim 11 characterized by compensation of a gradual dust collection on the mirror (3) or on the photodetector (5) and/or an age-conditioned decrease of sensitivity respectively power of the light source (4) by measuring and analog storage of the reflection value on starting operation and prior to each further closing pulse and entry of the decrease of reflection, thus determined as a correction value for the next measuring process, into the following signal processing.

18. Apparatus acc. to claim 11 characterized by an electronic follow-up relay which can be set to a period selected and released by the breaking signal for the equipment to control the relative humidity of air, e.g. a fan, and which will extend the switch-on duration of said equipment beyond the moment when the set value of the relative air humidity has been reached.

19. Application of the method acc. to claims 1 to 10 and of the apparatus acc. to claims 11 to 18 for the consecutive determination within settable periods, of the respective actually prevailing relative humidity of air in wet rooms, such as shower baths, bathrooms, swimming pools and other industrially used rooms showing higher degrees of humidity, in particular if they will not be used for a longer period, and for the automatic reduction or adjustment of the relative humidity of air in these rooms to a preset value.

20. Built-in fan using apparatuses acc. to claims 11 to 18, especially for application in rooms and for the purposes acc. to claim 19, characterized by a preferably rectangular fan housing (40) containing a fan unit (45) with a flange-mounted driving motor (46), in which, between same and the cover plate (41) closing the housing (40) towards space and air admitted and provided with air admitting holes (42), at least one mounting plate (50) has been arranged at and on which all or the most important components of the control system and the apparatuses acc. to claims 11 to 18 have been fitted, including the necessary wiring and the power pack.

21. Built-in fan acc. to claim 20 characterized in that the mounting plate (50) with its apparatuses and systems acc. to claims 11 to 18 is, by means of a plug connector (71), linked to the motor terminal box (48) of the fan unit (45) and can easily be pulled out of the plug connector (71) on removal of the cover plate (41) at the side of the air admission of the fan housing (40) and exchanged, if need be, for a replacement mounting plate (50).

22. Built-in fan acc. to claims 20 and 21 characterized in that the follow-up relay (73) has been fitted to a small, separate and removable mounting plate (70) which, equally using some plug connectors (71, 72), can be electrically linked to the large mounting plate (50) respectively to the motor terminal box (48) and which can also be detached from the large mounting plate (50).

23. Built-in fan acc. to claims 20 to 22 characterized in that onto the large mounting plate (50) or onto the small one (70) using connectors (74, 76), a power supply box (54) has been plugged of which the housing also serves to enclose the follow-up relay (73) fitted to the small mounting plate (70).

24. Built-in fan acc. to claims 20 to 23 characterized in that the cover plate (41), towards air inlet and space, belonging to the fan housing (40), has been detachably fixed to its frame (61) and provided with chamber-like recesses (64) to receive suitably dimensioned air filter elements (65).

25. Built-in fan acc. to claim 20 characterized in that the easily detachable cover plate (41) has been fixed to its frame (61) by small clamping claws (62) distributed over its peripheral edges.

26. Built-in fan acc. to claim 20 characterized in that on the wall (40) of the fan housing, perpendicular to the wall fitted with the air outlet (43) for the fan unit (45), a breakout section, i.e. a blind cover (44), has been arranged to receive the air outlet (43) or to allow its assembly if turning the fan unit (45) by 90° within the housing.

FIG.1

FIG.2

FIG.3

FIG.4

# FIG.5

# FIG.6

# FIG.7

EP 0 232 432 B1

FIG.8

EP 0 232 432 B1